# EUROPEAN PATENT APPLICATION

(11) **EP 0 738 533 A2**
(43) Date of publication of application: **23.10.1996**
(21) Application number: 96302667.9
(22) Date of filing: 17.04.1996
(51) Int. Cl.: B01D 35/30, A01K 63/00

(54) **Packing for use in filtration apparatus for aquarium fish tank**

(30) Priority: 17.04.1995 JP 114083/95
(71) Applicant: Nihon Doubutsu Yakuhin Kabushikigaisya, Tokyo (JP); Kitajima Sangyo Yugengaisya, Tokyo (JP)
(72) Inventor: Yoshida, Noboyuki, Tokyo (JP); Kitajima, Kazuhiro, Tokyo (JP)
(74) Representative: Suckling, Andrew Michael

(57) **Abstract**

In a substantially annular packing 1 made of a resilient material and intended to be positioned within a gap formed in a coupling region when a cover is fitted into the body accommodating a filtering medium of a filtration apparatus, the packing has at its lower extremity a flared portion 10 including a pair of bifurcated extensions in section, with the maximum width of the flared portion being sized to be larger than the gap within which the packing is positioned. Thus, a packing is obtained which ensures an effective watertight effect without being forcibly fitted into the coupling region.

## Description

The present invention relates to a packing for use in an filtration apparatus for an aquarium fish tank.

Hitherto known is a filtration apparatus of a type comprising a container-like body for accommodating a variety of filtering media, through which water within the tank is caused to flow by means of a pump so as to establish a circulating passage between the filtration apparatus and the tank. It is common that the filtration apparatus of this type is separated into a cover and the body for accommodating the filtering medium, in order to facilitate cleaning of the interior or replacement of the filtering medium. In this case, the interior of the filtration apparatus is subjected to a high water pressure, so that the cover was fitted into the body with a packing positioned within a coupling region between the body and the cover for the purpose of providing a watertightness therebetween. That is, the inner diameter of the receiving section of the body constituting the coupling region was sized to be smaller than the outer diameter of the fitting section of the cover constituting the coupling region so as to define a gap therebetween for receiving a packing.

An O-ring was well known as this packing. However, use of the O-ring as the packing of this type entailed the following problems.
(i) First, a high water pressure is applied to the interior of the filtration apparatus as described above, and this tendency becomes prominent in the case in particular where the tank is disposed at a higher position relative to the filtration apparatus. As a result, in order to keep the coupling region watertight against the increased water pressure, it is necessary to employ an O-ring having a considerably larger thickness than the dimensions of the gap defined between the fitting section and the receiving section and then to forcibly fit the cover into the body with the thicker O-ring interposed therebetween, which will render the action of opening or closing the cover extremely difficult.
(ii) Second, the exhibition of the watertight effect by the O-ring is limited to only the case where it is literally of a circular shape, whereas in the case of, e.g., a polygon-like ring, distortions may occur in the corners of the O-ring to impair the watertight effect, with the result that the sectional configuration of the filtration apparatus will be limited to a circle, which results in a limitation on the freedom of design.

The present invention was conceived in order to obviate the above problems involved in the prior art. It is therefore the object of the present invention to provide a packing made of a resilient material in a substantially annular form and intended to be positioned within a gap formed in a coupling region when a cover is fitted into the body accommodating a filtering medium of a filtration apparatus, wherein the packing has at its lower extremity a flared portion including a pair of bifurcated extensions in section, with the maximum width of the flared portion being sized to be larger than the gap within which the packing is positioned.

According to an aspect of the present invention, the packing is positioned within the gap formed in the coupling region so that it is compressively deformed into a shape in conformity with the contour of the gap while simultaneously being urged to return to its original shape by its own resilient force, thereby giving rise to an effect to keep the coupling region watertight.

More specific description will now be given to the above function. Since the packing has at its bottom end a flared portion of a bifurcated shape in section and the maximum width of the flared portion is sized to be larger than the gap within which the packing is positioned, the flared portion is deformed into a shape in conformity with the configuration of the gap while simultaneously being urged to return to its original shape by its own resilient force, allowing the external surfaces of the flared portion to come into abutment against the body and the cover to thereby keep the coupling region watertight.

In addition, by virtue of the bifurcated configuration of the flared portion, water pressure is applied to the bifurcated extensions of the flared portion so that the bifurcated extensions are spread out by the water pressure, whereupon by a force exceeding the resilient restoring force, the outer surfaces of the flared portion is allowed to rest tightly against the body and the cover. In other words, according to the present invention, the packing is forced to abut more strongly against the coupling region accordingly as the water pressure is increased, with the result that the watertight effect is increased in proportion to the water pressure.

These and other advantages, features and aspects of the present invention will become more apparent from the following detailed description thereof when taken in conjunction with the accompanying exemplary drawings, in which:
Fig. 1 is a partly cut-away perspective view of a packing in accordance with the present invention;
Fig. 2 is a sectional view of the packing in accordance with the present invention;
Fig. 3 is a sectional view illustrating a state of use of the packing in accordance with the present invention; and
Fig. 4 is a perspective view illustrating steps of mounting the packing in accordance with the present invention.

The present invention will now be described in greater detail with reference to the accompanying drawings which illustrate presently preferred exemplary embodiments thereof.

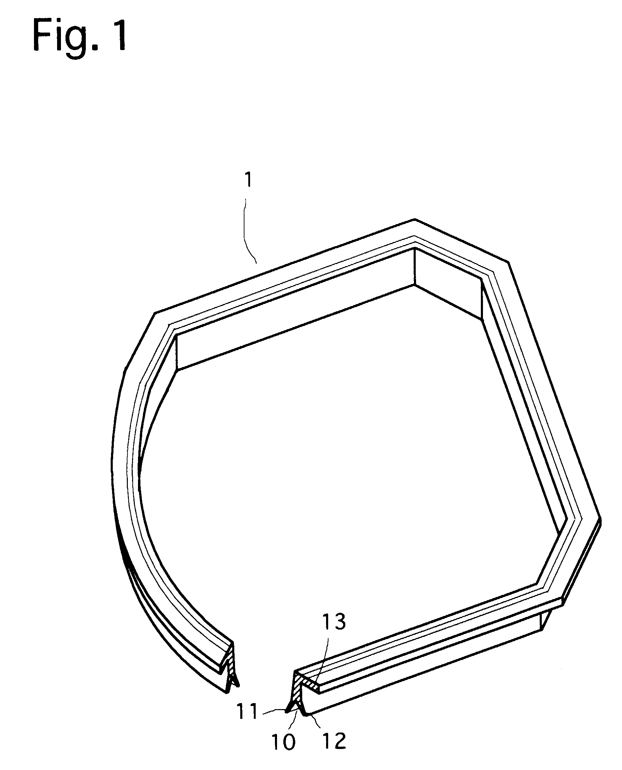

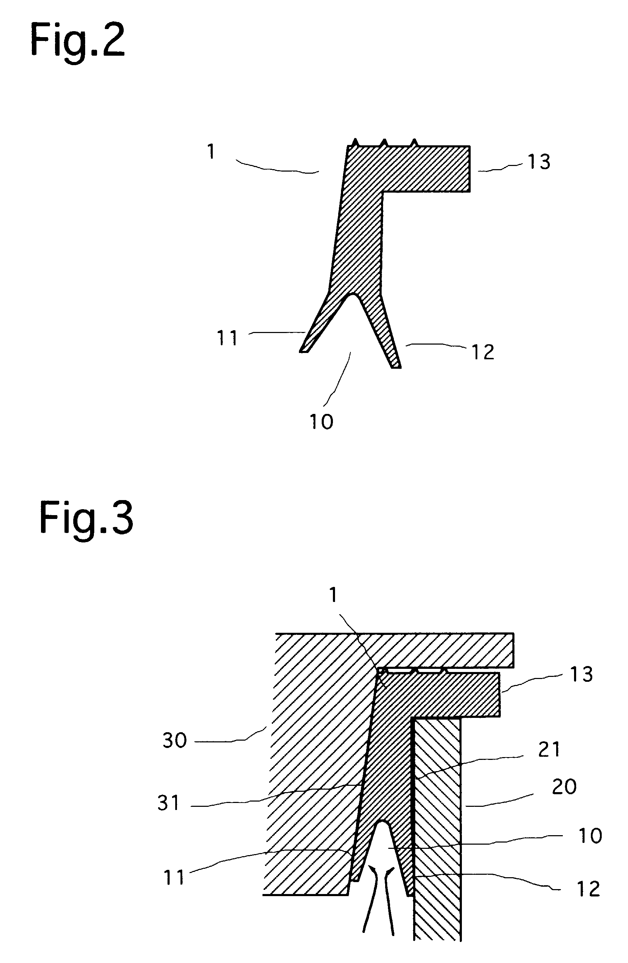

Referring first to Figs. 1 and 2, there is depicted an example of a packing in accordance with the present invention. The packing generally designated at reference numeral 1 is made of a resilient material, e.g., silicone rubber in this embodiment, in a substantially annular shape as shown which is obtained by combining a polygon and a segment of a circle in conformity with a configuration of a filtration apparatus to which this packing is to be applied.

The packing 1 includes at its lower extremity (the side facing the interior of the filtration apparatus when it is fitted to a coupling region of the filtration apparatus) a flared portion 10 having a bifurcated shape in section. The bifurcated flared portion 10 consists of an outer peripheral flared portion 12 and an inner peripheral flared portion 11 whose maximum width is so sized as to be slightly larger than the gap of the coupling region to which this packing 1 is fitted.

A flange portion designated at reference numeral 13 is provided on the outer periphery of the packing 1 at its upper extremity and serves to lock this packing 1 to the top of the coupling region of the body of the filtration apparatus. Different from an O-ring of the prior art, this packing is not intended to be forcibly fitted into the filtration apparatus, so that the locking to the filtration apparatus body with the aid of the flange portion as described above will be effective in order to prevent the packing 1 from falling off at the time of mounting.

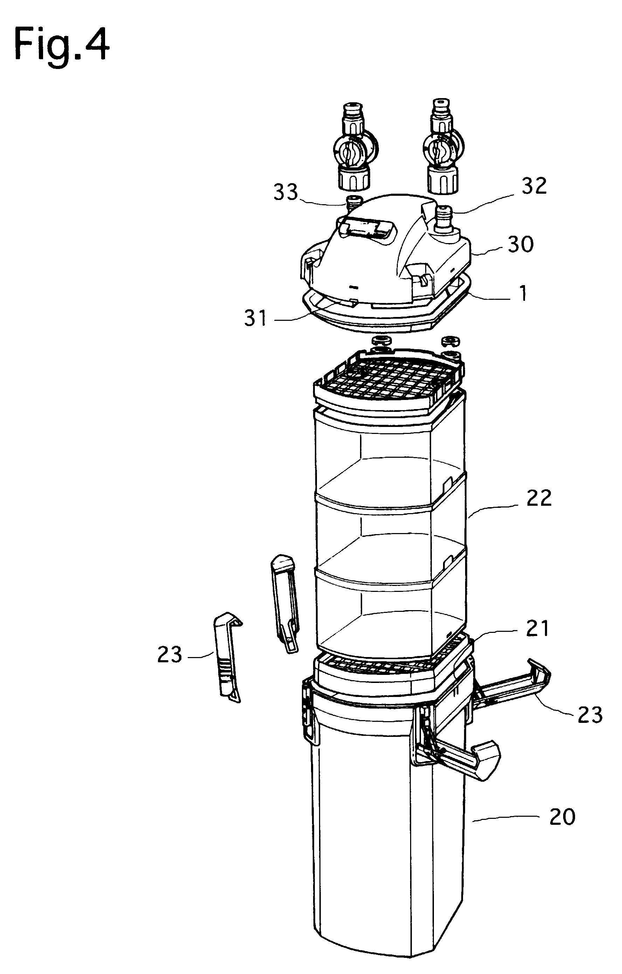

Referring to Figs. 3 and 4 there is depicted a state of use of the packing in accordance with the present invention. As shown, when a cover 30 is fitted to the body 20 of the filtration apparatus, the packing 1 is positioned within the gap defined between a fitting section 31 of the cover and a receiving section 21 of the body. Fig. 4 illustrates, by way of example, this type of filtration apparatus which comprises a filtering medium accommodation container 22 to be housed within the body of the filtration apparatus, a fastener 23 for fastening the cover 30 to the body 20, an outlet port 32 and an inlet port 33. It is natural that the packing of the present invention is not limited to only the application to the filtration apparatus shown herein.

The bifurcated flared portion 10 at the lower extremity of the above-described packing 1 has in its ordinary state as shown in Fig. 2 a larger maximum width than that of the gap within which the packing is positioned, whereas once the packing 1 is positioned within the gap defined between the fitting section 31 of the cover 30 and the receiving section 21 of the body 20, the flared portion 10 is deformed into a shape in conformity with the configuration of the gap as shown in Fig. 3 while simultaneously being urged to return to its original shape by its own resilient force, allowing the external surfaces of the outer flared portion 12 and of the inner flared portion 11 to come into abutment against the fitting section 21 of the body and with the receiving section 31 of the cover, respectively.

In this case, water pressure is applied to the bifurcated extensions of the flared portion 10 so that the bifurcated extensions are spread out by the water pressure as indicated by arrows in Fig. 3, whereupon by a force exceeding the resilient restoring force, the outer flared portion 12 and the inner flared portion 11 are allowed to abut tightly against the fitting section 21 of the body and the receiving section 31 of the cover.

The thus constituted packing of this invention will present the following unique effect.
(i) Since the abutment of the bifurcated in section flared portion against the coupling region brings about a watertight effect, the bifurcated extensions are spread out by water pressure so that the external surfaces of the flared portion are caused to abut tightly against the body and the cover by a force beyond the resilient restoring force, thus ensuring a more secure watertight effect as compared with the prior art.
(ii) Since due to the above reason the packing is forced to abut more strongly against the coupling region accordingly as the water pressure is increased, that is, the watertight effect is increased in proportion to the water pressure, it is not necessary to forcibly fit the packing into the coupling region as in the prior art packing, thus realizing an inventive packing which by no means obstructs the action of opening or closing the cover of the filtration apparatus.
(iii) Since the abutment of the bifurcated flared portion against the coupling region brings about a watertight effect, the bifurcated extensions snugly conform with the contour of the coupling region so that distortions hardly occur, to realize an inventive packing (e.g., a packing of such a shape as shown in the above embodiment) other than a simple annular packing, which was difficult to implement from the viewpoint of watertightness in the prior art, thus leading to no limitation on the freedom of design of the filtration apparatus used.

## Claims

1. A packing for use in a filtration apparatus for an aquarium fish tank, said packing being made of a resilient material in a substantially annular shape and intended to be positioned within a gap formed in a coupling region when a cover is fitted into the body accommodating a filtering medium of said filtration apparatus, wherein
said packing has at its lower extremity a flared portion including a pair of bifurcated extensions in section, with the maximum width of said flared portion being sized to be larger than said gap within which the packing is to be positioned.

2. A packing for use in a filtration apparatus for an aquarium fish tank as claimed in claim 1, wherein
said packing has at its upper extremity on the outer periphery a radially outwardly extending flang portion to be engaged with the top end of a receiving section of said body.
